# FASCICULE DE BREVET EUROPEEN

(11) **EP 3 479 325 B1**
(45) Date de publication et mention de la délivrance du brevet: **31.05.2023**
(21) Numéro de dépôt: 17733482.8
(22) Date de dépôt: 30.06.2017
(51) Int. Cl.: G06Q 20/34, G07F 7/08, H04L 9/32

(54) **PROCÉDÉ D'AUTHENTIFICATION DE DONNÉES DE PAIEMENT, DISPOSITIFS ET PROGRAMMES CORRESPONDANTS.**
VERFAHREN ZUR AUTHENTIFIZIERUNG VON ZAHLUNGSDATEN, ZUGEHÖRIGE VORRICHTUNGEN UND PROGRAMME
METHOD FOR AUTHENTICATING PAYMENT DATA, CORRESPONDING DEVICES AND PROGRAMS

(30) Priorité: 30.06.2016 FR 1656239
(43) Date de publication de la demande: 08.05.2019
(73) Titulaire: Banks and Acquirers International Holding, 75015 Paris (FR)
(72) Inventeur: GERAUD, Rémi, 26000 Valence (FR)
(74) Mandataire: Vidon Brevets & Stratégie
(86) Numéro de dépôt international: PCT/EP2017/066362
(87) Numéro de publication internationale: WO 2018/002349

(56) Documents cités:
- Renaud Lifchitz: "Hacking the NFC credit cards for fun and debit ;)", Hackito Ergo Sum 2012, 12 avril 2012 (2012-04-12), XP055358533, Extrait de l'Internet: URL:https://www.epiguard.ch/shop/ProdukteD etails/HES-2012-contactless-payments-insec urity.pdf [extrait le 2017-03-24]
- Van Els ET AL: "THE ADVANCED COMPUTING SYSTEMS ASSOCIATION Risks and Potentials of Using EMV for Internet Payments Risks and Potentials of using EMV for Internet Payments", USENIX Workshop on Smartcard Technology Chicago, 10 mai 1999 (1999-05-10), XP055358695, Extrait de l'Internet: URL:http://static.usenix.org/publications/ library/proceedings/smartcard99/full_paper s/herreweghen/herreweghen.pdf [extrait le 2017-03-24]
- Trend Micro: "Next-Gen Payment Processing Architectures", , 1 August 2015 (2015-08-01), XP055750190, Retrieved from the Internet: URL:https://www.trendmicro.com/vinfo/ph/se curity/news/security-technology/next-gen-p ayment-processing-architectures [retrieved on 2020-11-13]

## Description

### 1. Domaine

L'invention se rapporte au domaine de la sécurisation des données échangées par l'intermédiaire d'un protocole de transmission de données sans contact. La technique se rapporte plus particulièrement à la transmission de données de type NFC, dans laquelle on effectue une transmission entre un premier dispositif et un deuxième dispositif séparés d'une distance de l'ordre d'une dizaine de centimètre au plus. La technique ne s'applique pas et n'est pas destinée à s'appliquer dans le cadre de techniques de transmission de données de type WiFi, WiMax, LTE, dont les technologies de transmission sont différentes.

### 2. Art Antérieur

De nombreux dispositifs de la vie quotidienne sont aptes à communiquer et à échanger des données entre eux. Une part croissante de dispositifs utilisent, pour ce faire, des protocoles d'échange de données dit "en champ proches" ou encore NFC. Parfois, ces techniques de transmission de données sont également appelées RFID. Cette appellation n'est pas correcte puisque NFC signifie communication en champ proche, tandis que RFID se rapporte à des moyens d'identification par fréquence radio. Les deux utilisent des signaux radio pour toutes sortes de fins de repérage et de suivi, en remplaçant parfois des codes à barres. Toutes deux utilisent des moyens de transmission de données à courte portée.

Or, l'utilisation de ce type de technologie suscite encore des craintes et des interrogations de la part des utilisateurs. Nombreux sont ceux qui n'accordent pas ou peu confiance à ces technologies, plus particulièrement lorsqu'il s'agit de les utiliser à des fins de traitement de données personnelles et/ou confidentielles. C'est par exemple le cas du paiement. Relativement récemment, des dispositifs de paiement sans contact ont fait leur apparition. Il s'agit par exemple des cartes de paiement sans contact qui permettent d'effectuer un paiement (dont le montant est généralement plafonné) en apposant (ou en rapprochant) la carte de paiement d'un terminal de paiement compatible. Il s'agit également des terminaux de communication, qui intègrent également des *"puces"* sans contact : ces puces (également appelées *"contactless chip"*) et qui offrent des capacités d'échange de données aux terminaux de communication, capacités qui peuvent être utilisées pour effectuer des paiements, un peu comme si le terminal de communication imitait le comportement d'une carte de paiement sans contact. De nombreuses rumeurs, souvent infondées, laissent entendre qu'une communication ou qu'un paiement réalisé sans contact serait peu sûr. Il est également souvent rapporté que les dispositifs seraient peu sécurisés et qu'il serait possible de récupérer les données qui sont contenus dans ces dispositifs à l'insu de l'utilisateur. Bien que ces rumeurs soient souvent sans fondement, il existe cependant des risques lors de la transmission de données entre les dispositifs et notamment lors de la transmission de données de paiement. Les risques, cependant, ne proviennent pas de la technologie employée, en elle-même (NFC), mais généralement de l'utilisateur lui-même. Ainsi par exemple, dans le cas d'un terminal de communication utilisant l'interface NFC pour effectuer un paiement, il est possible que l'utilisateur ait installé une application peu sure, voire une application malveillante, dont l'objectif est d'utiliser des données de paiement à des fins de fraudes. La situation est la même du côté du terminal du commerçant.

Par exemple, dans le cadre d'une communication entre un dispositif d'utilisateur (un terminal de communication de type smartphone) et un terminal de paiement, notamment en utilisant des protocoles NFC pour le paiement, il est nécessaire que le dispositif et le terminal authentifie des données. À cette fin, le dispositif met en oeuvre un protocole d'authentification avec le terminal (par exemple un terminal de paiement, une borne d'un marchand, ou tout autre dispositif approprié). Le terminal contrôle que la phase d'authentification a réussi et dans le cas contraire refuse la transaction ou déclenche une alerte, ou met en oeuvre tout autre comportement jugé approprié dans une telle situation.

Dans les scénarios typiques, le terminal effectuant ces contrôles est, un dispositif sécurisé (comme un terminal de paiement). Il a été conçu pour prévenir la plupart des types possibles d'intrusion, tant matérielles que logicielles. Mais si le terminal de paiement est un dispositif tiers (terminal de communication de type tablette, smartphone, écran), alors la sécurité de ce terminal de communication (tiers) ne peut pas être garantie, pas plus que l'origine des applications installées sur ce terminal (par le commerçant lui-même). Si le commerçant n'est pas vigilant, il se peut que les applications installées sur ce terminal soient frauduleuses.

On présente ci-après un cas de dysfonctionnement possible, mis en oeuvre lors d'un paiement entre un terminal de communication et un dispositif d'utilisateur. On appelle "V" le vérificateur (par exemple le terminal ou l'appareil du marchand) et "*P*" le prouveur (dispositif de l'utilisateur : smartphone, tablette).

Les protocoles de paiement travaillent habituellement de la façon suivante, au cours de la transaction : *V* demande à *P* de signer numériquement des données. *P* signe les données, conformément à ce qui est demandé par *V* et transmet les données signées à *V*. Cette signature est vérifiée par *V*, et si elle est correcte, alors la transaction est acceptée et transférée dans le reste de la chaîne de traitement des paiements. Une telle procédure est appelée un *"défi-réponse" (challenge response)* et est utilisée par exemple par les spécifications EMV.

Le problème auquel il est proposé de remédier est le suivant : si *V* fonctionne sur un dispositif non sécurisé (i.e. un terminal de type tablette, PC ou autre, auquel on a adjoint des fonctionnalités de paiement) qui est infecté par un logiciel malveillant (installé par le commerçant ou par un tiers mal intentionné), alors ce logiciel peut abuser le terminal du client P. Un tel abus peut par exemple prendre la forme d'une succession de transactions (invisibles). Ceci peut être réalisé par exemple lorsque le terminal du commerçant force le dispositif de l'utilisateur à signer des messages arbitraires. Le dispositif de l'utilisateur, en position *« d'esclave »,* est alors obligé de signer ces données. Le logiciel malveillant installé sur le terminal du commerçant se sert ensuite de ces données signées pour créer des transactions frauduleuses.

C'est le paradoxe de ces traitements cryptographiques : il est certain que les traitements réalisés sont bons (car ils mettent en oeuvre des traitements cryptographiques), en revanche, l'utilisation qui est faite des résultats de ces traitements cryptographiques ne peut pas être garantie.

### 3. Résumé

L'invention ne pose pas ces problèmes de l'art antérieur. Plus particulièrement, l'invention apporte une solution simple à la problématique préalablement identifiée. Cette solution est entièrement compatible avec les dispositifs matériels existants.

Plus particulièrement, il est proposé un procédé d'authentification d'au moins une donnée, procédé mis en oeuvre lors d'une transaction de paiement intervenant entre un terminal de communication d'un commerçant et un dispositif d'utilisateur, procédé du type comprenant la transmission par le terminal de communication d'au moins une donnée à signer au dispositif d'utilisateur, par l'intermédiaire d'une liaison de données sans fils en champs proche.

Un tel procédé comprend :
- une étape d'obtention de ladite donnée à signer ;
- une étape d'obtention d'un identifiant dudit terminal de communication ;
- une étape signature, à l'aide d'une clé dudit terminal de communication, de ladite donnée à signer et dudit identifiant du terminal de communication, délivrant un couple de données signées ;
- une étape de transmission du couple de données signées audit dispositif d'utilisateur ; *et*
- une étape de réception, en provenance dudit dispositif d'utilisateur, d'une donnée chiffrée, établissant l'authentification dudit couple de données signées.

Ainsi, en signant les données qu'il transmet au dispositif d'utilisateur, le terminal de communications permet de certifier l'origine de ces données et donc permet au dispositif d'utilisateur de vérifier l'origine des données qu'il reçoit.

Selon une caractéristique particulière, le procédé comprend postérieurement à ladite étape de réception d'une donnée chiffrée en en provenance dudit dispositif d'utilisateur :
- une étape de déchiffrement, par une unité de traitement sécurisé dudit terminal de communication, de ladite donnée chiffrée, délivrant une donnée signée ;
- une étape de vérification de la validité de ladite donnée signée par rapport à une donnée de référence.

Ainsi, le procédé permet au terminal du commerçant de vérifier qu'il n'est pas lui-même victime d'une tentative de fraude de la part du dispositif d'utilisateur; On dispose ainsi d'un renforcement bilatéral de la sécurité de la transaction en champs proche.

Selon une caractéristique particulière, ladite donnée de référence est égale à ladite donnée à signer.

Ainsi, il y a une uniformité des données qui sont échangées entre le terminal de communication et le dispositif d'utilisateur : comme le terminal de communication possède déjà la donnée à signer, il est aisé de vérifier que la donnée qu'il reçoit de la part du dispositif d'utilisateur est correcte.

Selon une caractéristique particulière, que postérieurement à l'étape de vérification de la validité de ladite donnée signée par rapport à la donnée de référence délivre un résultat positif, le procédé comprend une étape de transmission, par le terminal de communication, de ladite donnée signée à un système de traitement de transaction de paiement.

Ainsi, lorsque l'authentification des données est proprement réalisée, la transaction de paiement est mise en oeuvre.

Ladite étape de signature comprend :
- une étape de transmission, de ladite donnée à signer et dudit identifiant du terminal de communication, à une unité de traitement sécurisé dudit terminal de communication, par une unité de traitement général dudit terminal de communication ;
- une étape de signature, par ladite unité de traitement sécurisée, à l'aide de ladite clé du terminal de communication, de ladite donnée à signer et dudit identifiant du terminal de communication, délivrant respectivement une donnée signée et un identifiant signé ;
- une étape de transmission, de ladite une donnée signée et de l'identifiant signé à ladite une unité de traitement général dudit terminal de communication.

On sécurise ainsi la production des données qui sont transmises au dispositif d'utilisateur en empêchant que ces données ne soient forgées par d'autres applications présentes sur le terminal de communication.

Ladite clé du terminal de communication est une clé privée appartenant à un couple {clé privée ; clé publique}.

Ainsi, on assure une sécurité plus grande en utilisant une architecture à clé publique. Le procédé comprend, au sein du dispositif d'utilisateur, entre l'étape de transmission du couple de données signées et l'étape de réception de la donnée chiffrée :
- une étape de réception du couple de données signées par le dispositif d'utilisateur ;
- une étape de vérification, à l'aide d'une clé, de la signature des données du couple de données signées ; et
   lorsque la signature des données du couple de données signées est correcte :
   - une étape de signature, à l'aide d'une clé de signature *tk,* d'au moins une des données précédemment reçues de la part du terminal du commerçant, délivrant une donnée signée ;
   - une étape de chiffrement de ladite donnée signée à l'aide d'une clé de chiffrement délivrant la donnée chiffrée ;
   - une étape de transmission de la donnée chiffrée audit terminal du commerçant.

Selon un autre aspect, l'invention se rapporte également à un terminal de communication comprenant une unité de traitement générale, une mémoire. Un tel terminal comprend une unité de traitement sécurisée et une mémoire sécurisée et au moins un circuit reconfigurable de traitement de transaction de paiement avec un terminal d'utilisateur comprenant notamment une authentification d'une donnée, ledit terminal de communication comprenant :
- des moyens d'obtention d'une donnée à signer ;
- des moyens d'obtention d'un identifiant dudit terminal de communication ;
- des moyens de signature, à l'aide d'une clé dudit terminal de communication, de ladite donnée à signer et dudit identifiant du terminal de communication, délivrant un couple de données signées ;
- des moyens de transmission du couple de données signées audit dispositif d'utilisateur ; *et*
- des moyens de réception, en provenance dudit dispositif d'utilisateur, d'une donnée chiffrée, établissant l'authentification dudit couple de données signées.

Selon un autre aspect, la technique se rapporte également à un terminal d'utilisateur qui comprend des moyens de mise en oeuvre du procédé tel que décrit précédemment.

Selon une implémentation préférée, les différentes étapes des procédés selon l'invention sont mises en oeuvre par un ou plusieurs logiciels ou programmes d'ordinateur, comprenant des instructions logicielles destinées à être exécutées par un processeur de données d'un module relais selon l'invention et étant conçu pour commander l'exécution des différentes étapes des procédés.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en oeuvre ses propres modules logiciels.

### 4. Dessins

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un synoptique de la technique proposée authentifiant des données transmises entre un terminal de communication d'un commerçant et un dispositif d'utilisateur ;
- la figure 2 présente un synoptique de la technique proposée réalisant une signature de données au sein du terminal de communication du commerçant ;
- la figure 3 représente schématiquement un terminal de communication du commerçant selon la présente ;
- la figure 4 décrit représente schématiquement un dispositif d'utilisateur selon la présente.

### 5. Description

### 5.1. Principe général

Comme explicité précédemment, le principe général de l'invention consiste notamment à intégrer, dans le schéma de *"défi-réponse",* une ou plusieurs contraintes additionnelles. La présente invention propose une modification protocolaire qui permet de résister aux attaques des terminaux comprenant des logiciels malveillants. À titre secondaire, cette modification protocolaire permet également de protéger les terminaux des commerçants eux-mêmes contre des réponses non sollicités provenant d'autres appareils (c'est à dire des appareils malveillants qui tenteraient d'attaquer un terminal de commerçant authentique). Cette modification protocolaire offrant ainsi une couche supplémentaire de protection contre d'autres types d'attaques *(DoS "Deny of Serverce", Concurency Attacks* - *attaques par concurrence d'accès aux ressources-*)*.*

Ainsi, lorsqu'une transaction de paiement est effectuée entre un terminal d'un commerçant et un dispositif d'utilisateur, un processus de type *"challenge*/*response"* (*"défi*/*réponse"* en français) est mis en oeuvre afin que le terminal du commerçant identifie (authentifie) le dispositif d'utilisateur (et vice versa). On suppose que le terminal du commerçant n'est pas sécurisé en tant que tel (il s'agit d'un téléphone, d'une tablette ou d'un PC), mais qu'il dispose de ressources de sécurisation. Ces ressources de sécurisation peuvent par exemple prendre la forme d'un *"secure element* - *SE"* (élément sécurisé en français), d'un *"Trusted Execution Environment* - *TEE"* (environnement d'exécution sécurisé en français) ou encore d'un autre composant matériel ou logiciel dédié. On suppose, pour les explications qui vont suivre, que l'application de paiement du terminal du commerçant s'appelle *TPC,* et qu'elle comprend un module de vérification (d'identification) appelé *V (il s'agit par exemple d'un SE, d'un TEE ou plus généralement d'une unité de traitement sécurisée).* On suppose également qu'il existe une application de paiement sur le dispositif d'utilisateur DU, et que le dispositif de l'utilisateur *(DU)* comprend un module de preuve (de confirmation d'identité) appelé *P (il s'agit par exemple d'un SE, d'un TEE ou plus généralement d'une unité de traitement sécurisée).* Dans un autre mode de réalisation, le dispositif d'utilisateur peut être une carte de paiement classique, dans laquelle on a effectué des modifications protocolaires et matérielles permettant de mettre en oeuvre la présente technique.

Lors de la mise en oeuvre conjointe des applications de paiement *TPC* et *DU,* le procédé mis en oeuvre est globalement le suivant :
- les données d'authentification qui sont transmises par *V* à *P* (c'est à dire les données de *"challenge"*) sont signées numériquement par *V* lui-même.
- la réponse transmise par P est chiffrée, se sorte que seul *V* puisse en vérifier la validité.

Afin permettre une telle mise en oeuvre, il suffit de doter *V* d'une clé (publique) qui est connue de *P*.

La logique sous-jacente à ce procédé est que *P* ignore purement et simplement les demandes de signature qui ne proviennent pas directement de la partie sécurisée de *V* (i.e. par exemple depuis le *« secure element »* auquel *V* à accès ou depuis l'environnement de confiance auquel *V* a accès) : on suppose en effet que seule cette architecture est en mesure de réaliser une signature numérique valide du challenge (défi) avant sa transmission à *P.*

Il existe une raison pour laquelle cette supposition est faite : les inventeurs ont eu l'idée de disposer la clé publique de signature (de *V*) directement accessible par les ressources de sécurisation du terminal du commerçant. Les ressources de sécurisation conservent cette clé et elles ne la rendent accessible qu'à un nombre limité d'application de confiance (par exemple une seule : l'application de paiement installée sur le terminal du commerçant). Par ailleurs, le « *secure element* » effectue lui-même les opérations de chiffrement pour le compte de l'application de paiement du terminal du commerçant. Ainsi, dans la première étape, avant la transmission du défi *("challenge")* au terminal de communication de l'utilisateur, le défi est signé par les ressources de sécurisation en utilisant la clé de *V* (la clé de l'application de paiement). Selon l'invention cette clé est une clé publique.

De plus, le fait que la réponse qui est transmise par P soit chiffrée permet de se prémunir de situations dans lesquelles un fraudeur détecte et rejoue des traces d'authentification valides (attaque par rejeu). L'attaque peut être mise en oeuvre tant par une application malveillante installée sur l'appareil du marchand que par une application malveillante installée sur l'appareil du client.

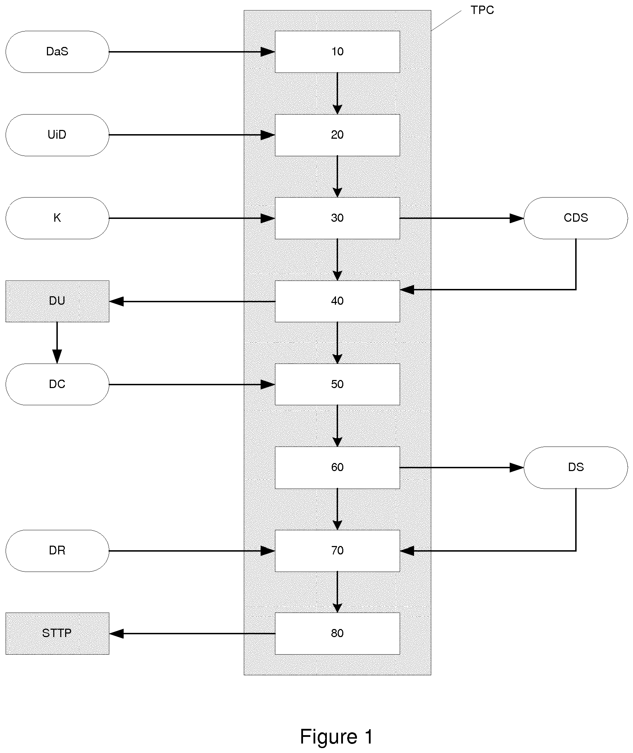

On décrit, en relation avec la figure 1, la technique proposée authentifiant des données transmises entre un terminal de communication d'un commerçant et un dispositif d'utilisateur. On rappelle que l'on souhaite s'assurer que le dispositif d'utilisateur ne signe que des données qui proviennent légitimement du terminal de communication (faisant office de terminal de paiement) du commerçant. La technique comprend ainsi :
- une étape d'obtention (10) de la donnée à signer *(DaS)* ;
- une étape d'obtention (20) d'un identifiant du terminal de communication *(UiD)* ;
- une étape signature (30), à l'aide d'une clé (K) du terminal de communication, de la donnée à signer *(DaS)* et de l'identifiant du terminal de communication *(UiD),* délivrant un couple de données signées *(CDS)* ;
- une étape de transmission (40) du couple de données signées *(CDS)* au dispositif d'utilisateur ; *et*
- une étape de réception (50), en provenance du dispositif d'utilisateur, d'une donnée chiffrée *(DC)*, établissant l'authentification du couple de données signées.

En effet, selon la présente divulgation, le fait de recevoir une donnée chiffrée en provenance du dispositif d'utilisateur entérine le fait que le couple de données signées à bien été authentifié par le dispositif d'utilisateur. Ceci est pratique car il n'est pas nécessaire de transmettre un accusé de réception ou une confirmation spécifique de l'authentification. On réduit ainsi les échanges. En cas d'absence de réponse de la part du dispositif d'utilisateur, il est possible de déduire que les données transmises sont erronées (erreur de réception des données transmises par exemple). De son côté, le dispositif d'utilisateur vérifie la signature des données transmises et ne transmet aucune réponse en cas d'absence d'authentification.

Si le dispositif d'utilisateur répond, alors le procédé se poursuit par une vérification des données reçues du dispositif d'utilisateur et il comprend :
- une étape de déchiffrement (60), par l'unité de traitement sécurisé du terminal de communication, de la donnée chiffrée *(DC)*, délivrant une donnée signée *(DS)* ;
- une étape de vérification (70) de la validité de la donnée signée *(DS)* par rapport à une donnée de référence *(DR)* ;
- une étape de transmission (80), par le terminal de communication, de la donnée signée *(DS)* à un système de traitement de transaction de paiement (STTP).

Ces trois dernières étapes permettent au terminal du commerçant de ne pas être dupé par des données « rejouées » arbitrairement par un dispositif d'utilisateur qui serait lui-même frauduleux.

Ainsi, la solution procurée possède l'avantage de protéger le dispositif de l'utilisateur (et l'utilisateur lui-même) contre des demandes de signatures frauduleuses et de protéger le marchand contre de tentatives d'usurpation reçues de la part du dispositif de l'utilisateur. L'avantage est donc double du fait de la protection bilatérale.

En fonction des modes de réalisation, les clés utilisées pour la signature et le chiffrement peuvent soit être des couples clés publiques/privées ou des clés symétriques servant à la fois au chiffrement et au déchiffrement.

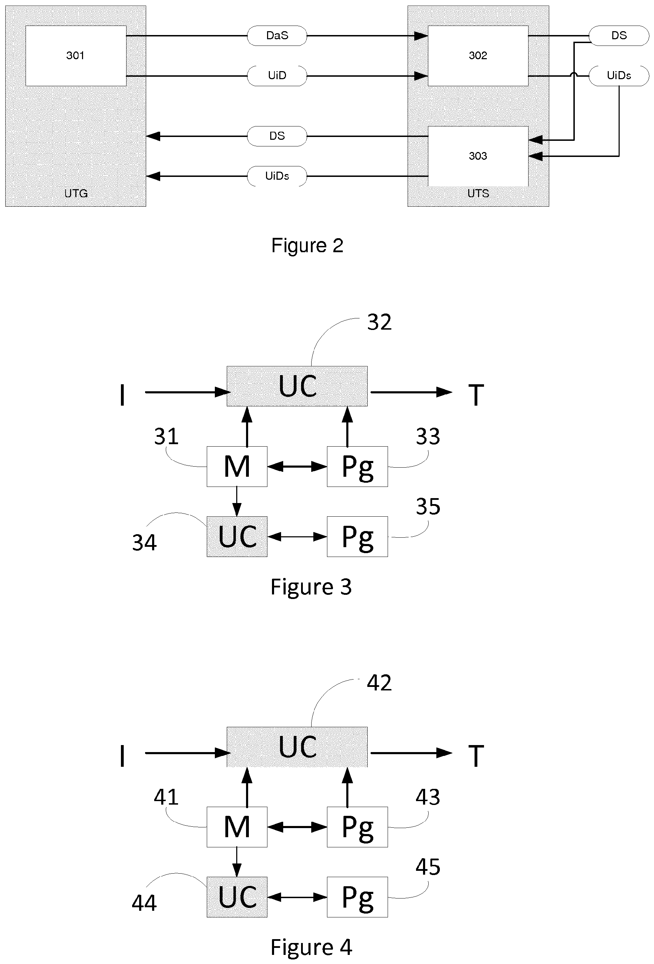

On décrit, en relation avec la figure 2, la technique proposée réalisant une signature de données au sein du terminal de communication du commerçant. Cette technique comprend :
- une étape de transmission (301), de ladite donnée à signer (DaS) et/ou dudit identifiant du terminal de communication (UiD), à une unité de traitement sécurisé (UTS) dudit terminal de communication, par une unité de traitement général (UTG) dudit terminal de communication ;
- une étape de signature (302), par ladite unité de traitement sécurisée, à l'aide de ladite clé du terminal de communication (K), de ladite donnée à signer (Das) et dudit identifiant (UiD) du terminal de communication, délivrant respectivement une donnée signée (DS) et un identifiant signé (UiDs) ;
- une étape de transmission (303), de ladite une donnée signée (DS) et de l'identifiant signé (UiDs) à ladite une unité de traitement général dudit terminal de communication.

### 5.2. Description d'un mode de réalisation

Dans ce mode de réalisation purement illustratif on suppose, pour plus de simplicité, que l'on utilise des mécanismes de signature et de chiffrement de type RSA (tant du côté du terminal du commerçant que du dispositif de l'utilisateur). Dans ce mode de réalisation, préalablement à la mise en oeuvre du protocole d'échange sécurisé, on suppose que deux phases d'installation ont été réalisées : une du côté du terminal du commerçant et une du côté du dispositif de l'utilisateur.

### 5.2.1. Phase d'installation du côté du terminal du commerçant

Le terminal du commerçant est doté d'une clé privée *sk*. Cette dotation peut être mise en oeuvre à n'importe quel moment. On suppose que cette clé privée *sk* est générée selon des techniques antérieures connues et qu'elle est placée au sein d'une ressource sécurisée du terminal du commerçant. Idéalement, cette clé privée est placée au sein d'un TEE (agissant comme une unité de traitement sécurisée) du terminal du commerçant. On dispose également, pour le terminal du commerçant, d'un identificateur unique (*uid*) qui est généré et signé (par exemple par l'opérateur de l'application de paiement). L'application de paiement est également installée sur le terminal du commerçant. Ces matériels (application de paiement, clé privée *sk* et identificateur unique uid) peuvent astucieusement être installés en même temps sur le terminal du commerçant, par l'intermédiaire d'un processus d'installation sécurisé (qui peut être mis en oeuvre soit en ligne, soit sur site par un technicien agrée, par exemple).

En dernier lieu, la clé publique pk (correspondant à la clé privée *sk*) est mise à disposition dans une base de donnée, avec l'identifiant unique *uid,* afin de former un couple {clé publique *pk*; identifiant unique *uid*}*.* Le couple {*pk*; *uid*} fait l'objet d'une signature (par exemple par l'opérateur de l'application de paiement si c'est lui qui a signé l'identifiant unique *uid*)*.*

Dans un mode de réalisation spécifique, la phase d'installation est réalisée lors de l'installation d'une application de paiement sur un terminal de communication (de type smartphone, tablette, ou ordinateur) du commerçant, ledit terminal de communication étant équipé d'un TEE et/ou d'un SE (également appelé module V). Ce mode de réalisation présente l'avantage de ne pas avoir à communiquer la clé privée *sk* au terminal de communication en tant que tel : cette donnée n'est communiquée qu'au SE ou au TEE. Ainsi, on assure que le terminal de communication (et surtout les éventuelles applications frauduleuse de ce terminal), ne puisse pas avoir accès à cette clé privée.

### 5.2.2. Phase d'installation du côté du dispositif de l'utilisateur

Le dispositif de l'utilisateur, qui est par exemple un terminal de communication de type smartphone, une tablette, est également équipé d'un SE ou d'un TEE (agissant comme une unité de traitement sécurisé). On rappelle que dans ce mode de réalisation, le client souhaite régler avec son dispositif. Ce dispositif dispose donc des données nécessaires à la réalisation d'un paiement. Il peut s'agir, dans un mode de réalisation spécifique, de données de carte bancaire (nom du porteur, numéro de Carte PAN, date de validité, code de vérification). Il peut également d'agir d'autres données, en fonction des modes de réalisation.

Dans le cadre de la présente technique, la phase d'installation consiste à déposer, dans le SE ou le TEE du dispositif de l'utilisateur (appelé également module *P*), la clé de signature *tk,* qui est utilisée pour effectuer une signature des données signées (data et uid) transmises par le terminal du commerçant, après que le dispositif d'utilisateur ait vérifié la validité des signatures apposées par le terminal du commerçant.

Cette installation peut typiquement être mise en oeuvre par l'installation d'une application de paiement, comme cela est le cas de l'application de paiement installée sur le terminal du commerçant.

Une possibilité avantageuse est d'installer cette clé de signature en même temps qu'une application bancaire : par exemple l'application bancaire du client. En effet, avec le développement des applications bancaires (application qui permettent de gérer ses comptes depuis un smartphone o une tablette), une solution intéressante, tant pour le client que pour la banque, peut consister à disposer d'une application bancaire qui permette également de réaliser des paiements. Dans ce cas, les données nécessaires au paiement ne sont pas nécessairement des données de carte bancaire, mais peuvent être des données spécifiquement préparées par l'application bancaire de la banque, voire spécifiquement préparée, au moment du paiement, par l'établissement financier lui-même (c'est à dire par un serveur auquel l'application bancaire du client est connectée).

Pour effectuer un paiement, dans ce cas particulier, le client ouvre son application bancaire; sélectionne le fait qu'il souhaite effectuer un paiement; saisit un éventuel code confidentiel (ou s'authentifie par exemple par voie biométrique); et appose son dispositif sur le terminal du commerçant. L'application bancaire réagit aux requêtes du terminal du commerçant (comme explicité dans la présente) et le paiement est effectué. Pour la banque, comme pour le client, les bénéfices sont réels, tant en termes de sécurité de la transaction (faite par l'application bancaire), qu'en termes de fidélisation du client (qui n'est plus obligé d'effectuer un paiement avec une application tierce, dont il n'a pas de garantie, par exemple au niveau de la sécurité et de la confidentialité des données transmises et traitées).

### 5.2.3. Déroulé de l'échange de données d'authentification

Dans ce mode de réalisation, l'authentification est mise en oeuvre de la manière suivante :
- Le terminal du commerçant (ou le module *V*) transmet le couple *{[uid]ₛₖ, [data]ₛₖ}* au dispositif de l'utilisateur (ou au module P); le couple de données *{[uid]ₛₖ, [data]ₛₖ}* comprend *[uid]ₛₖ* qui est l'identifiant unique signé avec la clé *sk* et des données *[data]ₛₖ* également signées avec la clé *sk*;
- le dispositif de l'utilisateur (ou le module *P*) utilise l'identifiant unique *uid* pour obtenir la clé publique *pk*; par exemple, il télécharge cette clé publique sur un serveur dédié ou encore, il recherche cette clé dans une base de données interne (par exemple un fichier texte ou un fichier xml) fourni par l'application de paiement ;
- le dispositif de l'utilisateur (ou le module *P*) utilise la clé publique *pk* pour vérifier la validité de la signature de *uid* et de *data*; en cas d'erreur sur l'une ou l'autre de ces signatures (par exemple *l'uid* en clair n'est pas *l'uid* possédé par le client), alors le client stoppe le processus (et ne répond pas au terminal du commerçant);
- lorsque les deux signatures sont correctes (et que l'on peut en déduire qu'elles ont été réalisées par le terminal du commerçant), le dispositif de l'utilisateur poursuit le traitement en signant les données *[data]* avec la clé *tk* et en chiffrant ces données signées avec la clé publique du terminal du commerçant pk: *Encₚₖ([data]ₜₖ)*; puis il transmet ces données au terminal du commerçant;
- le terminal du commerçant réceptionne les données en provenance du dispositif de l'utilisateur, puis déchiffre ces données à l'aide de sa clé privée *sk*, et vérifie la signature des données. Si la signature des données est incorrecte, alors le processus est stoppé; dans le cas contraire, la signature est transmise au réseau de traitement des paiements.

Ainsi, l'authentification des données transmises, lors d'une opération de paiement, entre un terminal d'un commerçant et un dispositif d'utilisateur, en utilisant une communication en champs proche (NFC), permet de valider une transaction de manière sécuritaire.

### 5.3. Autres caractéristiques et avantages

On décrit, en relation avec la figure 3, un terminal de communication mis en oeuvre pour réaliser une authentification de données dans le cadre d'un processus de paiement, selon le procédé décrit préalablement.

Par exemple, le terminal de communication, faisant office de terminal de paiement, comprend une mémoire 31 comprenant notamment une mémoire tampon, une unité de traitement général 32, équipée par exemple d'un microprocesseur, et pilotée par un programme d'ordinateur 33, et une unité de traitement sécurisée 34 (notée V précédemment), pilotée par un programme d'ordinateur 35, ces unités de traitement mettant en oeuvre le procédé d'authentification tels que décrit précédemment pour effectuer un paiement auprès du commerçant.

À l'initialisation, les instructions de code du programme d'ordinateur 35 sont par exemple chargées dans une mémoire avant d'être exécutées par le processeur de l'unité de traitement sécurisée 34. L'unité de traitement 34 reçoit en entrée au moins une donnée à authentifier. Le microprocesseur de l'unité de traitement sécurisée 34 met en oeuvre les étapes du procédé d'authentification, selon les instructions du programme d'ordinateur 35 pour fournir, à l'unité de traitement générale 32, une donnée signée et le cas échéant une donnée représentative de l'identifiant du terminal de communication (elle aussi signée). L'unité de traitement générale 32 effectue un traitement de ces données pour les transmettre à un dispositif d'un client (par exemple un smartphone, une tablette) dans le cadre d'une transaction de paiement.

Pour cela, le terminal de communication comprend, outre la mémoire tampon 31, des moyens de communications, tels que des modules de communication réseau, des moyens de transmission de donnée et des circuits de transmission de données entre les divers composants du terminal de communication.

Ces moyens peuvent se présenter sous la forme d'un processeur particulier implémenté au sein du terminal de communication. Selon un mode de réalisation particulier, ce dispositif met en oeuvre une application spécifique qui est en charge de la réalisation des transactions, cette application étant par exemple fournie par le fabricant du processeur en question afin de permettre l'utilisation dudit processeur ou par un fournisseur de solution de paiement pour des terminaux "ouverts". Pour ce faire, le processeur comprend des moyens d'identification uniques. Ces moyens d'identification uniques permettent d'assurer l'authenticité du processeur.

Par ailleurs, le dispositif comprend en outre les moyens de communication en champs proches, dits NFC et des moyens de transmission et de réception de données en provenance de réseaux de communications. Ces moyens se présentent également comme des interfaces de communications permettant d'échanger des données sur des réseaux de communication, des moyens d'interrogations et de mise à jour de base de données.

On décrit, en relation avec la figure 4, un dispositif d'utilisateur mis en oeuvre pour réaliser une authentification de données dans le cadre d'un processus de paiement, selon le procédé décrit préalablement.

Par exemple, le dispositif d'utilisateur comprend une mémoire 41 constituée d'une mémoire tampon, une unité de traitement général 42, équipée par exemple d'un microprocesseur, et pilotée par un programme d'ordinateur 43, et une unité de traitement sécurisée 44 (notée *P*, précédemment), pilotée par un programme d'ordinateur 45, ces unités de traitement mettant en oeuvre le procédé d'authentification tels que décrit précédemment pour effectuer un paiement auprès du commerçant.

À l'initialisation, les instructions de code du programme d'ordinateur 45 sont par exemple chargées dans une mémoire avant d'être exécutées par le processeur de l'unité de traitement sécurisée 44. L'unité de traitement sécurisée 44 reçoit en entrée, en provenance de l'unité de traitement générale, au moins une donnée à authentifier (donnée signée par le terminal de communication). Le microprocesseur de l'unité de traitement sécurisée 44 met en oeuvre les étapes du procédé d'authentification, selon les instructions du programme d'ordinateur 45 pour fournir, à l'unité de traitement générale 42, au moins une donnée non signée. L'unité de traitement générale 42 effectue un traitement de ces données pour d'une part comparer des données de référence et les données issues du retrait des signatures puis, si ces données sont correctes, transmettre au moins une d'entre elle à l'unité de traitement sécurisée pour effectuer une signature de cette données avec une clé de signature et chiffrer cette nouvelle donnée signée avec une clé du terminal de communication. L'unité de traitement sécurisée transmet cette donnée à l'unité de traitement générale qui la transmet à nouveau les transmettre au terminal de communication (par exemple un smartphone, une tablette) d'un commerçant.

Pour cela, le dispositif d'utilisateur comprend, outre la mémoire tampon 41, des moyens de communications, tels que des modules de communication réseau, des moyens de transmission de donnée et des circuits de transmission de données entre les divers composants du dispositif d'utilisateur.

Ces moyens peuvent se présenter sous la forme d'un processeur particulier implémenté au sein du dispositif d'utilisateur. Selon un mode de réalisation particulier, ce dispositif met en oeuvre une application spécifique qui est en charge de la réalisation des transactions, cette application étant par exemple fournie par le fabricant du processeur en question afin de permettre l'utilisation dudit processeur ou par un fournisseur de solution de paiement pour des terminaux "ouverts". Pour ce faire, le processeur comprend des moyens d'identification uniques. Ces moyens d'identification uniques permettent d'assurer l'authenticité du processeur.

Par ailleurs, le dispositif comprend en outre les moyens de communication en champs proches, dits NFC et des moyens de transmission et de réception de données en provenance de réseaux de communications. Ces moyens se présentent également comme des interfaces de communications permettant d'échanger des données sur des réseaux de communication, des moyens d'interrogations et de mise à jour de base de données.

## Revendications

1. Procédé d'authentification d'au moins une donnée, procédé mis en oeuvre lors d'une transaction de paiement intervenant entre un terminal de communication d'un commerçant et un dispositif d'utilisateur, procédé du type comprenant la transmission par le terminal de communication d'au moins une donnée à signer au dispositif d'utilisateur, par l'intermédiaire d'une liaison de données sans fils en champs proche, procédé **caractérisé en ce qu'**il comprend :
- une étape d'obtention (10) de ladite donnée à signer *(DaS)* ;
- une étape d'obtention (20) d'un identifiant dudit terminal de communication *(UiD) ;*
- une étape de signature (30), au sein d'une unité de traitement sécurisé (UTS) dudit terminal de communication, à l'aide d'une clé privée (sk), appartenant à un couple {clé privée ; clé publique} dudit terminal de communication, de ladite donnée à signer *(DaS)* et dudit identifiant du terminal de communication *(UiD),* délivrant un couple de données signées *(CDS)*, cette étape de signature comprenant :
- une étape de transmission (301), de ladite donnée à signer et dudit identifiant du terminal de communication, à ladite unité de traitement sécurisé (UTS) dudit terminal de communication, par une unité de traitement général (UTG) dudit terminal de communication ;
- une étape de signature (302), par ladite unité de traitement sécurisée, à l'aide de ladite clé privée du terminal de communication, de ladite donnée à signer et dudit identifiant du terminal de communication, délivrant respectivement une donnée signée et un identifiant signé ;
- une étape de transmission (303), de ladite une donnée signée et de l'identifiant signé à ladite une unité de traitement général dudit terminal de communication.
- une étape de transmission (40) du couple de données signées *(CDS)* audit dispositif d'utilisateur ; *et*
- une étape de réception (50), en provenance dudit dispositif d'utilisateur, d'une donnée chiffrée *(DC)*, établissant l'authentification dudit couple de données signées.
- une étape de déchiffrement (60), par une unité de traitement sécurisé dudit terminal de communication, de ladite donnée chiffrée *(DC),* délivrant une donnée signée *(DS)* ;
- une étape de vérification (70) de la validité de ladite donnée signée *(DS)* par rapport à une donnée de référence *(DR)* ladite donnée de référence *(DR)* étant égale à ladite donnée à signer *(Das)* ; et
- lorsque l'étape de vérification délivre un résultat positif, une étape de transmission (80), par le terminal de communication, de ladite donnée signée *(DS)* à un système de traitement de transaction de paiement (STTP).

2. Procédé d'authentification selon la revendication 1, **caractérisé en ce qu'**il comprend, au sein du dispositif d'utilisateur, entre l'étape de transmission (40) du couple de données signées (CDS) et l'étape de réception (50) de la donnée chiffrée (DC) :
- une étape de réception du couple de données signées par le dispositif d'utilisateur ;
- une étape de vérification, à l'aide de la clé publique du terminal de communication, de la signature des données du couple de données signées ; et
lorsque la signature des données du couple de données signées est correcte :
- une étape de signature, à l'aide d'une clé de signature *tk,* d'au moins une des données précédemment reçues de la part du terminal du commerçant, délivrant une donnée signée ;
- une étape de chiffrement de ladite donnée signée à l'aide d'une clé de chiffrement délivrant la donnée chiffrée (DC) ;
- une étape de transmission de la donnée chiffrée audit terminal du commerçant.

3. Terminal de communication comprenant une unité de traitement générale, une mémoire, terminal **caractérisé en ce qu'**il comprend une unité de traitement sécurisée et une mémoire sécurisée et au moins un circuit reconfigurable de traitement de transaction de paiement avec un terminal d'utilisateur comprenant notamment une authentification d'une donnée, ledit terminal de communication comprenant :
- des moyens d'obtention d'une donnée à signer *(DaS)* ;
- des moyens d'obtention d'un identifiant dudit terminal de communication *(UiD)* ;
- des moyens de signature, au sein d'une unité de traitement sécurisé (UTS) dudit terminal de communication, à l'aide d'une clé privée (sk), appartenant à un couple {clé privée ; clé publique} dudit terminal de communication, de ladite donnée à signer *(DaS)* et dudit identifiant du terminal de communication *(UiD),* délivrant un couple de données signées *(CDS)* ; ces moyens comprenant :
- des moyens de transmission, de ladite donnée à signer et dudit identifiant du terminal de communication, à ladite unité de traitement sécurisé (UTS) dudit terminal de communication, par une unité de traitement général (UTG) dudit terminal de communication ;
- des moyens de signature, par ladite unité de traitement sécurisée, à l'aide de ladite clé du terminal de communication, de ladite donnée à signer et dudit identifiant du terminal de communication, délivrant respectivement une donnée signée et un identifiant signé ;
- des moyens de transmission, par ladite unité de traitement sécurisée, de ladite une donnée signée et de l'identifiant signé à ladite une unité de traitement général dudit terminal de communication,
- des moyens de transmission du couple de données signées *(CDS)* audit dispositif d'utilisateur ; *et*
- des moyens de réception, en provenance dudit dispositif d'utilisateur, d'une donnée chiffrée *(DC)*, établissant l'authentification dudit couple de données signées ;
- des moyens de déchiffrement (60), par une unité de traitement sécurisé dudit terminal de communication, de ladite donnée chiffrée (DC), délivrant une donnée signée (DS) ;
- des moyens de vérification (70) de la validité de ladite donnée signée (DS) par rapport à une donnée de référence (DR), ladite donnée de référence *(DR)* étant égale à ladite donnée à signer *(Das)* ; et
- des moyens de transmission (80), par le terminal de communication, de ladite donnée signée *(DS)* à un système de traitement de transaction de paiement (STTP).

4. Produit programme d'ordinateur téléchargeable depuis un réseau de communication et stocké sur un support lisible par ordinateur et exécutable par un microprocesseur, **caractérisé en ce qu'**il comprend des instructions de code de programme conduisant à l'exécution d'un procédé d'authentification selon la revendication 1, lorsque lesdites instructions de code de programme sont exécutées par un ordinateur.

## Patentansprüche

1. Verfahren zur Authentifizierung mindestens eines Datums, wobei das Verfahren bei einer Zahlungstransaktion eingesetzt wird, die zwischen einem Verbindungsendgerät eines Händlers und einer Benutzervorrichtung stattfindet, wobei das Verfahren die Übertragung mindestens eines zu signierenden Datums an die Benutzervorrichtung durch das Verbindungsendgerät über eine drahtlose Nahfeld-Datenverbindung umfasst, wobei das Verfahren durch gekennzeichnet ist, dass es umfasst:
- einen Schritt (10) des Erhalts des zu signierenden Datums (DaS);
- einen Schritt (20) des Erhalts eines Identifikators des Verbindungsendgeräts (UiD);
- einen Schritt (30) der Signatur, innerhalb einer sicheren Verarbeitungseinheit (UTS) des Verbindungsendgeräts, mit Hilfe eines Privatschlüssels (sk) des zu signierenden Datums (DaS) und des Identifikators des Verbindungsendgeräts (Uid), der einem Paar {Privatschlüssel; öffentlicher Schlüssel) des Verbindungsendgeräts angehört, der ein Paar von signierten Daten (CDS) liefert, wobei dieser Signaturschritt umfasst:
- einen Schritt (301) der Übertragung des zu signierenden Datums und des Identifikators des Verbindungsendgeräts an die sichere Verarbeitungseinheit (UTS) des Verbindungsendgeräts durch eine allgemeine Verarbeitungseinheit (UTG) des Verbindungsendgeräts;
- einen Schritt (302) der Signatur des zu signierenden Datums und des Identifikators des Verbindungsendgeräts durch die sichere Verarbeitungseinheit mit Hilfe des Privatschlüssels des Verbindungsendgeräts, der ein signiertes Datum bzw. einen signierten Identifikator liefert;
- einen Schritt (303) der Übertragung des signierten Datums und des signierten Identifikators an die allgemeine Verarbeitungseinheit des Verbindungsendgeräts,
- einen Schritt (40) der Übertragung des signierten Datenpaars(CDS) an die Benutzervorrichtung; und
- einen Schritt (50) des Empfangs eines verschlüsselten Datums (DC) von der Benutzervorrichtung, das die Authentifizierung des signierten Datenpaars feststellt;
- einen Schritt (60) der Entschlüsselung des verschlüsselten Datenpaars (DC) durch eine sichere Verarbeitungseinheit des Verbindungsendgeräts, der ein signiertes Datum (DS) liefert;
- einen Schritt (70) der Überprüfung der Gültigkeit des signierten Datums (DS) im Vergleich mit einem Referenzdatum (DR), wobei das Referenzdatum (DR) gleich dem zu signierenden Datum (Das) ist; und
- wenn der Überprüfungsschritt ein positives Resultat liefert, einen Schritt (80) der Übertragung des signierten Datums (DS) an ein Verarbeitungssystem einer Zahlungstransaktion (STTP) durch das Verbindungsendgerät.

2. Authentifizierungsverfahren nach Anspruch 1, **dadurch gekennzeichnet, dass** es in der Benutzervorrichtung zwischen dem Übertragungsschritt (40) des signierten Datenpaars (CDS) und dem Empfangsschritt (50) des verschlüsselten Datums (DC) umfasst:
- einen Schritt des Empfangs des signierten Datenpaars durch die Benutzervorrichtung;
- einen Schritt der Überprüfung der Signatur der Daten des signierten Datenpaars mit Hilfe des öffentlichen Schlüssels des Verbindungsendgeräts; und
wenn die Signatur der Daten des signierten Datenpaars korrekt ist:
- einen Schritt der Signatur mindestens eines der vorher von dem Endgerät des Händlers empfangenen Daten mit Hilfe eines Signaturschlüssels tk, der ein signiertes Datum liefert;
- einen Schritt der Verschlüsselung des signierten Datums mit Hilfe eines Verschlüsselungsschlüssels, der das verschlüsselte Datum (DC) liefert;
- einen Schritt der Übertragung des verschlüsselten Datums an das Endgeräts des Händlers.

3. Verbindungsendgerät, umfassend eine allgemeine Verarbeitungseinheit, einen Speicher, wobei das Endgerät **dadurch gekennzeichnet ist, dass** es eine sichere Verarbeitungseinheit und einen sicheren Speicher und mindestens eine rekonfigurierbare Schaltung zur Verarbeitung einer Zahlungstransaktion mit einem Benutzerendgerät, umfassend insbesondere eine Authentifizierung eines Datums, umfasst, wobei das Verbindungsendgerät umfasst:
- Mittel zum Erhalt eines zu signierenden Datums (DaS);
- Mittel zum Erhalt eines Identifikators des Verbindungsendgeräts (UiD);
- Mittel zur Signatur, innerhalb einer sicheren Verarbeitungseinheit (UTS) des Verbindungsendgeräts, mit Hilfe eines Privatschlüssels (sk) des zu signierenden Datums (DaS) und des Identifikators des Verbindungsendgeräts (Uid), der einem Paar (Privatschlüssel; öffentlicher Schlüssel) des Verbindungsendgeräts angehört, der ein Paar von signierten Daten (CDS) liefert, wobei diese Mittel umfassen:
- Mittel zur Übertragung des zu signierenden Datums und des Identifikators des Verbindungsendgeräts an die sichere Verarbeitungseinheit (UTS) des Verbindungsendgeräts durch eine allgemeine Verarbeitungseinheit (UTG) des Verbindungsendgeräts;
- Mittel zur Signatur des zu signierenden Datums und des Identifikators des Verbindungsendgeräts durch die sichere Verarbeitungseinheit mit Hilfe des Privatschlüssels des Verbindungsendgeräts, die ein signiertes Datum bzw. einen signierten Identifikator liefern;
- Mittel zur Übertragung des signierten Datums und des signierten Identifikators an die allgemeine Verarbeitungseinheit des Verbindungsendgeräts,
- Mittel zur Übertragung des signierten Datenpaars(CDS) an die Benutzervorrichtung; und
- Mittel zum Empfang eines verschlüsselten Datums (DC) von der Benutzervorrichtung, die die Authentifizierung des signierten Datenpaars feststellen;
- Mittel (60) zur Entschlüsselung des verschlüsselten Datenpaars (DC) durch eine sichere Verarbeitungseinheit des Verbindungsendgeräts, die ein signiertes Datum (DS) liefern;
- Mittel (70) zur Überprüfung der Gültigkeit des signierten Datums (DS) im Vergleich mit einem Referenzdatum (DR), wobei das Referenzdatum (DR) gleich dem zu signierenden Datum (Das) ist; und
- Mittel (80) zur Übertragung des signierten Datums (DS) an ein Verarbeitungssystem einer Zahlungstransaktion (STTP) durch das Verbindungsendgerät.

4. Computerprogrammprodukt, das von einem Verbindungsnetz heruntergeladen werden kann und auf einem von einem Computer lesbaren Träger gespeichert ist und von einem Mikroprozessor ausführbar ist, **dadurch gekennzeichnet, dass** es Programmcodebefehle umfasst, die zur Ausführung eines Authentifizierungsverfahrens nach Anspruch 1 führen, wenn die Programmcodebefehle von einem Computer ausgeführt werden.

## Claims

1. Method for authenticating at least one piece of data, the method being implemented during a payment transaction taking place between a merchant's communications terminal and a user device, the method being of the type comprising the transmission, by the communications terminal, of at least one piece of data to be signed to the user device by means of a near field communications wireless data link, the method being **characterized in that** it comprises:
- a step for obtaining (10) said piece of data to be signed (*DaS*)
- a step for obtaining (20) an identifier of said communications terminal (*UiD*);
- a step of signing (30), within a secured processing unit (*UTS*) of said communications terminal, by means of a private key (sk) belonging to a {private key; public key} pair of said communications terminal, of said piece of data to be signed (*DaS*) and of said identifier of the communications terminal *(UiD),* delivering a pair of signed pieces of data *(CDS),* the step of signing comprising:
- a step of transmission (301) of said piece of data to be signed and said identifier of the communications terminal to said secured processing unit (UTS) of said communications terminal by a general processing unit (UTG) of said communications terminal;
- a step of signing (302), by said secured processing unit, using said private key of the communications terminal, of said piece of data to be signed and said identifier of the communications terminal, respectively delivering a piece of signed data and a signed identifier;
- a step of transmission (303) of said piece of signed data and of the signed identifier to said general processing unit of said communications terminal;
- a step of transmission (40) of the pair of signed pieces of data *(CDS)* to said user device; and
- a step of reception (50), from said user device, of a piece of encrypted data (*DC*) establishing the authentication of said pair of signed pieces of data;
- a step of decryption (60), by means of a secured processing unit of said communications terminal, of said piece of encrypted data (*DC*) delivering a piece of signed data (*DS*);
- a step of verification (70) of the validity of said piece of signed data (*DS*) in relation to a piece of reference data (DR), said piece of reference data (*DR*) being equal to said piece of data to be signed (*DaS*); and
- when the step of verification delivers a positive result, a step of transmission (80), by the communications terminal, of said piece of signed data (DS) to a payment transaction processing system (STTP).

2. Method of authentication according to claim 1, **characterized in that** it comprises, within the user device, between the step of transmission (40) of the pair of signed data (CDS) and the step of reception (50) of the piece of encrypted data (DC):
- a step of reception of the pair of signed data by the user device;
- a step of verification, by means of the public key of the communications terminal, of the signature of the data of the pair of pieces of signed data; and
when the signature of the pair of pieces of signed data is correct:
- a step of signing, by means of a signature key *tk,* of at least one of the pieces of data previously received from the merchant's terminal, delivering a piece of signed data;
- a step of encryption of said piece of signed data by means of an encryption key delivering the piece of encrypted data (DC)
- a step of transmission of the piece of encrypted data to the merchant's terminal.

3. Communications terminal comprising a general processing unit, a memory, terminal **characterized in that** it comprises a secured processing unit and a secured memory and at least one reconfigurable circuit for processing payment transactions with a user terminal, comprising especially an authentication of a piece of data, said communications terminal comprising:
- means for obtaining a piece of data to be signed (*DaS*);
- means for obtaining an identifier of said communications terminal (*UiD*);
- means for signing, within a secured processing unit (UTS) of said communications terminal, by means of a private key belonging to a {private key; public key} pair of said communications terminal, of said piece of data to be signed (*DaS*) and of said identifier of the communications terminal *(UiD),* delivering a pair of signed pieces of data *(CDS)*; said means comprising :
- means of transmission of said piece of data to be signed and said identifier of the communications terminal to said secured processing unit (UTS) of said communications terminal by a general processing unit (UTG) of said communications terminal;
- means for signing, by said secured processing unit, using said private key of the communications terminal, of said piece of data to be signed and said identifier of the communications terminal, respectively delivering a piece of signed data and a signed identifier;
- means for transmission, by said secured processing unit, of said piece of signed data and of the signed identifier to said general processing unit of said communications terminal;
- means of transmission of the pair of pieces of signed data *(CDS)* to said user device; and
- means of reception, from said user device, of a piece of encrypted data (*DC*) establishing the authentication of said pair of signed data
- means of decryption (60), by means of a secured processing unit of said communications terminal, of said piece of encrypted data (*DC*) delivering a piece of signed data (*DS*);
- means of verification (70) of the validity of said piece of signed data (*DS*) in relation to a piece of reference data (*DR*), said piece of reference data (*DR*) being equal to said piece of data to be signed (*DaS*); and
- means of transmission (80), by the communications terminal, of said piece of signed data (DS) to a payment transaction processing system (STTP).

4. Computer program product downloadable from a communications network and stored on a medium readable by a computer and executable by a microprocessor, **characterized in that** it comprises program code instructions leading to the execution of a method for processing data according to claim 1, when said program code instructions are executed on a computer.
